(19) Europäisches Patentamt
European Patent Office
Office européen des brevets

(11) EP 4 718 077 A1

(12) **EUROPEAN PATENT APPLICATION**
published in accordance with Art. 153(4) EPC

(43) Date of publication:
01.04.2026 Bulletin 2026/14

(51) International Patent Classification (IPC):
*G01N 35/00* (2006.01)    *G01N 35/10* (2006.01)

(21) Application number: 24810932.4

(52) Cooperative Patent Classification (CPC):
G01N 35/00; G01N 35/10

(22) Date of filing: 10.05.2024

(86) International application number:
PCT/JP2024/017503

(87) International publication number:
WO 2024/241924 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.05.2023 JP 2023083671

(71) Applicant: HITACHI HIGH-TECH CORPORATION
Tokyo 105-6409 (JP)

(72) Inventors:
• SATO, Yuri
Tokyo 105-6409 (JP)
• NODA, Kazuhiro
Tokyo 100-8280 (JP)

(74) Representative: Strehl & Partner mbB
Maximilianstrasse 54
80538 München (DE)

(54) **AUTOMATED ANALYSIS DEVICE AND ANALYSIS METHOD THEREFOR**

(57) There is provided an automatic analyzer that is capable of highly accurately detecting an abnormality at the time of aspiration even though the amount of a sample used for analysis is small. An automatic analyzer according to the present invention includes: a dispensing unit that aspirates a sample from a sample vessel that houses the sample; a control unit that controls the dispensing unit such that the dispensing unit aspirates the sample in a third predetermined amount greater than a first predetermined amount that is an amount of the sample used for analysis, the dispensing unit discharges the sample in a second predetermined amount to a predetermined site different from the sample vessel, and the dispensing unit discharges the sample in the first predetermined amount to a reaction vessel used for analysis; a detection unit that detects a pressure waveform in the dispensing unit; and a determining unit that determines faulty aspiration and/or clogging, based on a first waveform that is the pressure waveform when the dispensing unit aspirates the sample, the faulty aspiration being in a state in which the dispensing unit insufficiently aspirates the sample, the clogging being a state in which the sample is clogged in the dispensing unit.

FIG. 3A

```
            START
              │
 ROTATE PROBE (MOVE ABOVE SAMPLE VESSEL)          S301
              │
 ASPIRATE AIR AND MEASURE PRESSURE GAGE           S302
              │
           LOWER PROBE                            S303
              │
 ASPIRATE SAMPLE (FIRST PREDETERMINED AMOUNT +    S304
 SECOND PREDETERMINED AMOUNT) AND MEASURE PRESSURE
              │
           RAISE PROBE                            S305
              │
           ASPIRATE AIR                           S306
              │
 ROTATE PROBE (MOVE TO WASHING CHAMBER)           S307
              │
           LOWER PROBE                            S308
              │
 DISCHARGED (AIR + SAMPLE IN SECOND PREDETERMINED AMOUNT)  S309
              │
 WASH OUTER SIDE AND RAISE PROBE                  S310
              │
 ROTATE PROBE (MOVE ABOVE REACTION VESSEL)        S311
              │
           LOWER PROBE                            S312
              │
 DISCHARGE SAMPLE AND REAGENT TO REACTION VESSEL  S313
              │
           DISCARD TIP                            S314
              │
         IS THERE                                 S315
 ANY ABNORMALITY WHEN DISPENSING SAMPLE
              ?
              │
      CONTINUE TO FIG. 3B
```

**Description**

Technical Field

The present invention relates to an automatic analyzer.

Background Art

A technique has been disclosed, which detects an abnormality in dispensing of a specimen (sample) or a reagent by comparing a difference between output of a pressure sensor immediately before the start of an aspiration operation and output of the pressure sensor during the aspiration operation or the like with a threshold in an automatic analyzer such as a biochemical analyzer or an immunoanalyzer (see Patent Literature 1).

Citation List

Patent Literature

Patent Literature 1: Japanese Unexamined Patent Application Publication No. 2007-315984

Summary of Invention

Technical Problem

However, the difference between the output of the pressure sensor immediately before the start of the aspiration operation and the output of the pressure sensor during the aspiration operation varies depending on the amount of liquid aspirated. Therefore, for the technique described in Patent Literature 1, it is necessary to change the threshold based on the amount of liquid aspirated. In particular, when the amount of liquid aspirated is small, the difference between the output of the pressure sensor immediately before the start of the aspiration operation and the output of the pressure sensor during the aspiration operation is small, and an erroneous detection may be performed.

Therefore, an object of the present invention is to provide an automatic analyzer capable of accurately detecting an abnormality at the time of aspiration even in a case where the amount of a sample used for analysis is small. Solution to Problem

To solve the above-described problem, an automatic analyzer according to the present invention includes: a dispensing unit that aspirates a sample from a sample vessel that houses the sample; a control unit that controls the dispensing unit such that the dispensing unit aspirates the sample in a third predetermined amount greater than a first predetermined amount that is an amount of the sample used for analysis, discharges the sample in a second predetermined amount to a predetermined site different from the sample vessel, and discharges the sample in the first predetermined amount to a reaction vessel used for analysis; a detection unit that detects a pressure waveform in the dispensing unit; and a determining unit that determines faulty aspiration and/or clogging, based on a first waveform that is the pressure waveform when the dispensing unit aspirates the sample, the faulty aspiration being a state in which the dispensing unit insufficiently aspirates the sample, the clogging being a state in which the sample is clogged in the dispensing unit.

Advantageous Effects of Invention

According to the present invention, it is possible to provide an automatic analyzer capable of accurately detecting an abnormality at the time of aspiration even in a case where the amount of a sample used for analysis is small.

Brief Description of Drawings

[FIG. 1] FIG. 1 is a schematic diagram showing the overall configuration of an automatic analyzer.
[FIG. 2] FIG. 2 is a schematic diagram showing the configuration of a part of the automatic analyzer (specifically parts involved in dispensing a sample).
[FIG. 3A] FIG. 3A is a flowchart showing the first half of an abnormality determination method during dispensing.
[FIG. 3B] FIG. 3B is a flowchart showing the second half of an abnormality determination method during dispensing.
[FIG. 4] FIG. 4 is a flowchart showing a faulty aspiration determination method.

[FIG. 5A] FIG. 5A is a diagram showing examples of a first waveform at the time of normal aspiration and a first waveform at the time of faulty aspiration regarding a sample greater than a first predetermined amount by a second predetermined amount.

[FIG. 5B] FIG. 5B is a diagram showing an example of a second waveform for determining faulty aspiration.

[FIG. 6A] FIG. 6A is a diagram showing examples when it is possible to set a first threshold (a threshold for faulty aspiration determination).

[FIG. 6B] FIG. 6B is a diagram showing examples when it is not possible to set a first threshold (a threshold for faulty aspiration determination).

[FIG. 7] FIG. 7 is a diagram showing examples of a first waveform when a sample greater than a second predetermined amount by a first predetermined amount is normally aspirated and a first waveform when a sample in the first predetermined amount is normally aspirated.

[FIG. 8] FIG. 8 is a diagram showing an example of a set tolerance for a first threshold (a threshold for faulty aspiration determination).

[FIG. 9] FIG. 9 is a flowchart showing a clogging determination method.

[FIG. 10] FIG. 10 is a diagram showing examples of pressure waveforms (a first waveform and a second waveform for clogging determination) at the time of normal aspiration and the time of clogging.

[FIG. 11A] FIG. 11A is a diagram showing examples when it is possible to set a second threshold (a threshold for clogging determination).

[FIG. 11B] FIG. 11B is a diagram showing examples when it is not possible to set a second threshold (a threshold for clogging determination).

[FIG. 12] FIG. 12 is a diagram showing examples of a pressure waveform of clogging at the time of aspiration of a sample greater than a second predetermined amount by a first predetermined amount and a pressure waveform of clogging at the time of aspiration of a sample in the first predetermined amount.

[FIG. 13] FIG. 13 is a diagram showing examples of a set tolerance for a second threshold (a threshold for clogging determination).

Description of Embodiments

Embodiments of the present invention will be described based on the drawings.

(Overall Configuration of Automatic Analyzer)

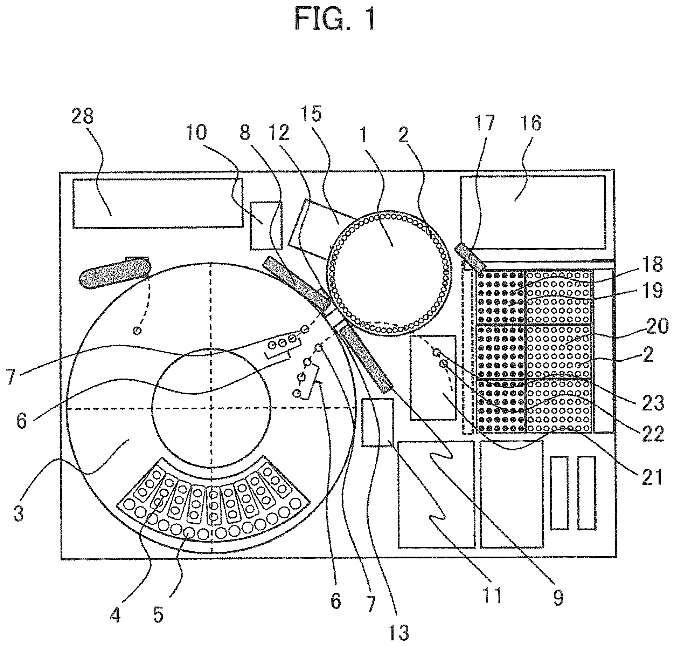

Fig. 1 is a schematic diagram showing an overall configuration of an automatic analyzer. As shown in Fig. 1, the automatic analyzer includes a reaction vessel tray 20, a dispensing tip/reaction vessel transfer mechanism 17, a reaction disk 1, a reagent and sample common housing unit 3, a first dispensing mechanism 8, a second dispensing mechanism 9, a dispensing tip tray 19, a spectrophotometer 15, a detecting mechanism 16, a dispensing tip/reaction vessel disposal box 21, water feed pumps 10, 11, a washing chambers 12, 13, a control unit 28, and the like.

The reaction vessel tray 20 stores a reaction vessel 2. The dispensing tip/reaction vessel transfer mechanism 17 supplies the reaction vessel 2 from the reaction vessel tray 20 to the reaction disk 1. A plurality of reaction vessels 2 are placed on the reaction disk 1 in a circumferential direction. The reaction disk 1 is rotatably driven to move the reaction vessels 2 to predetermined positions. A plurality of reagent vessels and sample vessels are placed on the reagent and sample common housing unit 3. In Fig. 1, the reagent vessels 4 are located on the inner circumference side of the sample vessels 5. However, the sample vessels 5 may be located on the inner circumference side of the reagent vessels 4, or the reagent vessels 4 and the sample vessels 5 may be located separately in a circumferential direction, not in a radial direction.

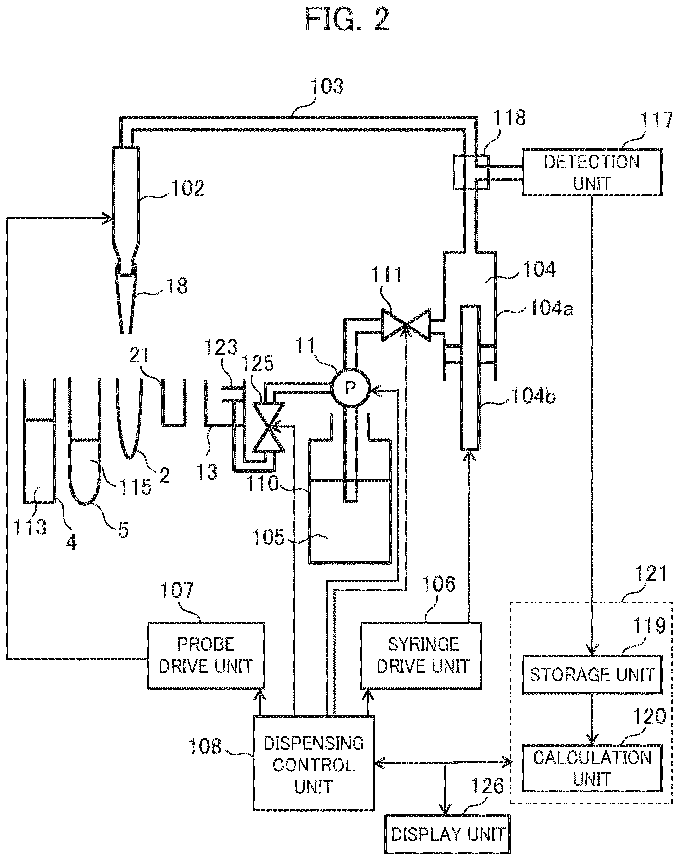

Each of the first dispensing mechanism 8 and the second dispensing mechanism 9 is disposed between the reaction disk 1 and the reagent and sample common housing unit 3, aspirates a sample from a sample vessel 5 and discharges the sample into the reaction vessel 2, and aspirates a reagent from a reagent vessel 4 and discharges the reagent into the reaction vessel 2. The first dispensing mechanism 8 and the second dispensing mechanism 9 are used for different tests in different analysis processes. For example, in a case where the first dispensing mechanism 8 is for biochemistry and the second dispensing mechanism 9 is for immunology, the first dispensing mechanism 8 dispenses a sample and a reagent for biochemical test, and the second dispensing mechanism 9 dispenses a sample and reagent for immunological test. For a sample used in both biochemical and immunological tests, the first dispensing mechanism 8 accesses and dispenses the sample for the biochemical test and the second dispensing mechanism 9 accesses and dispenses the sample for the immunological test. It is highly necessary to prevent contamination between samples for the second dispensing mechanism 9 for immunology, a dispensing tip 18 is mounted on a dispensing probe 102 (see Fig. 2) of the second dispensing mechanism 9 for dispensing.

The dispensing tip tray 19 stores the dispensing tip 18. The dispensing tip/reaction vessel transfer mechanism 17 supplies the dispensing tip 18 to a dispensing tip mounting position 22, and the dispensing tip 18 is mounted on the dispensing probe 102 at the dispensing tip mounting position 22.

The dispensing probe 102 is capable of rotating and moving in a vertical direction. On a rotation trajectory of the dispensing probe 102, a reagent aspiration position 6 and a sample aspiration position 7 on the reagent and sample common housing unit 3, a first dispensing position and a second dispensing position on the reaction disk 1, and the washing chamber 12 (13) for washing the dispensing probe 102 are present. Since the dispensing tip 18 is used for the second dispensing mechanism 9, the dispensing tip mounting position 22 and a dispensing tip disposal position 23 are also present on the rotation trajectory of the dispensing probe 102.

For the biochemical test, the dispensing probe 102 aspirates a sample and a reagent. For the immunological test, the dispensing tip 18 mounted on the dispensing probe 102 aspirates the sample and the reagent. The sample and reagent are stirred and mixed in the reaction vessel 2 by an aspiration discharge operation by the dispensing probe 102 or the dispensing tip 18. In the present embodiment, the stirring of the sample and the reagent is performed by a pipetting operation by the dispensing probe 102 or the dispensing tip 18, but a stirring mechanism for stirring the sample and the reagent may be provided. The reaction vessel 2 storing a reaction solution containing a mixture of the sample and the reagent is managed by the reaction disk 1 at a predetermined temperature and reaction is accelerated for a predetermined period of time.

The spectrophotometer 15 for biochemical test is disposed around the reaction disk 1, includes a light source and a detector (not shown), and disperses and detects transmitted light obtained by irradiating the reaction solution containing the mixture of the sample and the reagent with light, and measures absorbance of the reaction solution.

The detecting mechanism 16 for immunological test measures the amount of light derived from luminescence reaction of a labeling substance contained in the reaction solution reacted for a predetermined period of time with the reaction disk 1 by using a photomultiplier tube as a detector.

In the biochemical test, a reaction vessel 2 for which the absorbance measurement has been completed on the reaction disk 1 is discarded in the dispensing tip/reaction vessel disposal box 21 by the dispensing tip/reaction vessel transfer mechanism 17. In the immunological test, the dispensing tip/reaction vessel transfer mechanism 17 moves, to the detecting mechanism 16, a reaction vessel 2 storing the reaction solution reacted for the predetermined period of time by the reaction disk 1, and moves, to the dispensing tip/reaction vessel disposal box 21, a reaction vessel 2 for which measurement has been completed by the detecting mechanism 16.

The water feed pumps 10, 11 are connected to the first dispensing mechanism 8 and the second dispensing mechanism 9, respectively, and supply wash water for washing the inside of the dispensing probe 102 (interior washing) and washing the outside of the dispensing tip 18 (exterior washing). The washing chamber 12 performs the interior washing and the exterior washing on the first dispensing mechanism 8, and the washing chamber 13 performs the interior washing and the exterior washing on the second dispensing mechanism 9.

The control unit 28 is connected to each mechanism of the automatic analyzer, and controls, for example, the rotational drive of the reaction disk 1, the rotational drive and vertical drive of the dispensing probe 102, and operations of aspirating and discharging the sample and the reagent. Note that, in Fig. 1, connection of each mechanism constituting the automatic analyzer and the control unit 28 is omitted for simplicity of illustration. The control unit 28 performs calculation for a predetermined analysis item based on a measured value from the spectrophotometer 15 or the detecting mechanism 16, and displays the result as a test result on a display unit 126 (see FIG. 2).

(Configurations of Dispensing Mechanisms)

Next, configurations of the dispensing mechanisms (dispensing unit) will be described in detail with reference to Fig. 2. Although the second dispensing mechanism 9 for which the dispensing tip 18 is used will be described as an example, a similar configuration can also be applied to the first dispensing mechanism 8.

Fig. 2 is a schematic diagram showing a configuration of a part (specifically parts involved in dispensing a sample) of the automatic analyzer. As shown in Fig. 2, a dispensing mechanism (the second dispensing mechanism 9) mainly includes a dispensing probe 102, a passage 103, a syringe 104, a syringe drive unit 106, a probe drive unit 107, a dispensing control unit 108, a detection unit 117, a branch block 118, a determining unit 121, and the like.

The dispensing probe 102 is connected to the syringe 104 via the passage 103, and the insides thereof are filled with wash water 105. The syringe 104 includes a cylinder 104a and a plunger 104b. The syringe drive unit 106 is connected to the plunger 104b. The syringe drive unit 106 drives the plunger 104b in a vertical direction with respect to the cylinder 104a, thereby aspirating and discharging fluid (liquid and gas) with the dispensing tip 18 connected to the dispensing probe 102.

The syringe 104 includes a passage communicating with a water supply tank 110, and this passage is provided with an interior washing solenoid valve 111 and the water feed pump 11. The wash water 105 is stored in the water supply tank 110, and the inside of the dispensing probe 102 can be washed by driving the water feed pump 11 to discharge the wash water 105 from the dispensing probe 102. An exterior washing nozzle 123 includes a passage communicating with the water supply tank 110, and this passage is provided with an exterior washing solenoid valve 125 and the water feed pump 11. Therefore, the outside of the dispensing tip 18 can be washed by driving the water feed pump 11 to discharge the wash water 105 to the dispensing tip 18 from the exterior washing nozzle 123. The dispensing probe 102 is washed in the washing chamber 13, for example, before dispensing of a reagent 113 and a sample 115. The dispensing tip 18 is washed in the washing chamber 13, for example, after the dispensing of the reagent 113 and the sample 115.

The dispensing control unit 108 controls the operations of the syringe drive unit 106, the probe drive unit 107, the water feed pump 11, the interior washing solenoid valve 111, and the exterior washing solenoid valve 125. The dispensing control unit 108 may be configured to control not only operation of each of the components of the dispensing mechanism but also the operation of the entire automatic analyzer. In this case, the control unit 28 executes the function of the dispensing control unit 108.

The detection unit 117 is a pressure sensor for example, and is connected to the branch block 118 disposed in the middle of the passage 103, and measures pressure in the passage 103.

The determining unit 121 is a circuit for determining whether an abnormality is present at the time of the dispensing operations of the dispensing mechanism. The determining unit 121 includes a storage unit 119 that stores data such as a pressure value, and a calculation unit 120 that executes processing on the data stored in the storage unit 119. The determining unit 121 is capable of communicating with the dispensing control unit 108, and transmits the content of an operation to the dispensing control unit 108 when it is determined, from a result of data processing by the calculation unit 120, that it is necessary to perform an operation of stopping the operation. The determining unit 121 may be incorporated in the dispensing control unit 108.

The display unit 126 is connected to the dispensing control unit 108 and the determining unit 121, and displays a result of data processing by the determining unit 121 that indicates whether an abnormality is present and the like.

(Method of Determining Abnormality at Time of Dispensing)

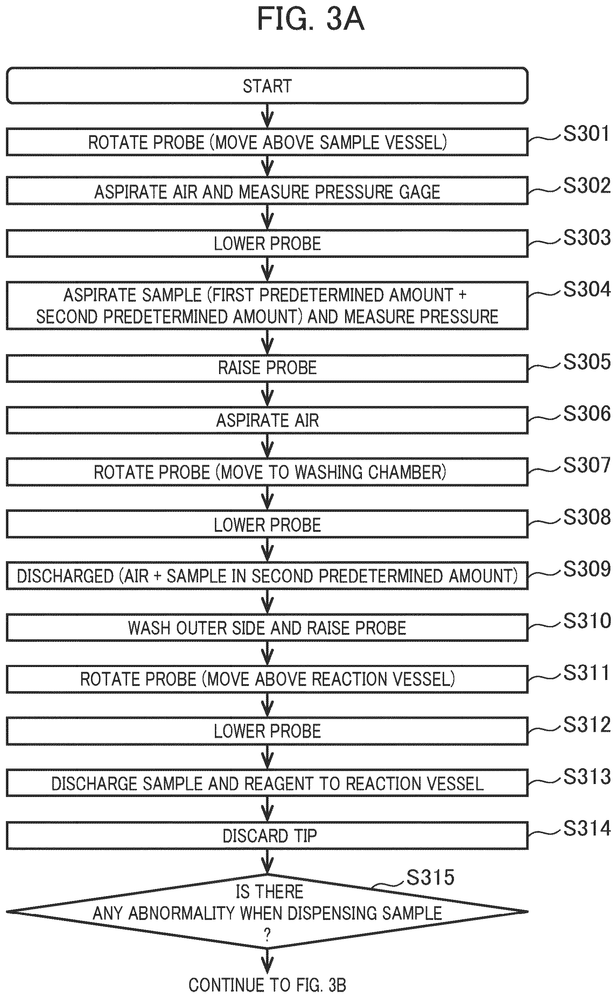

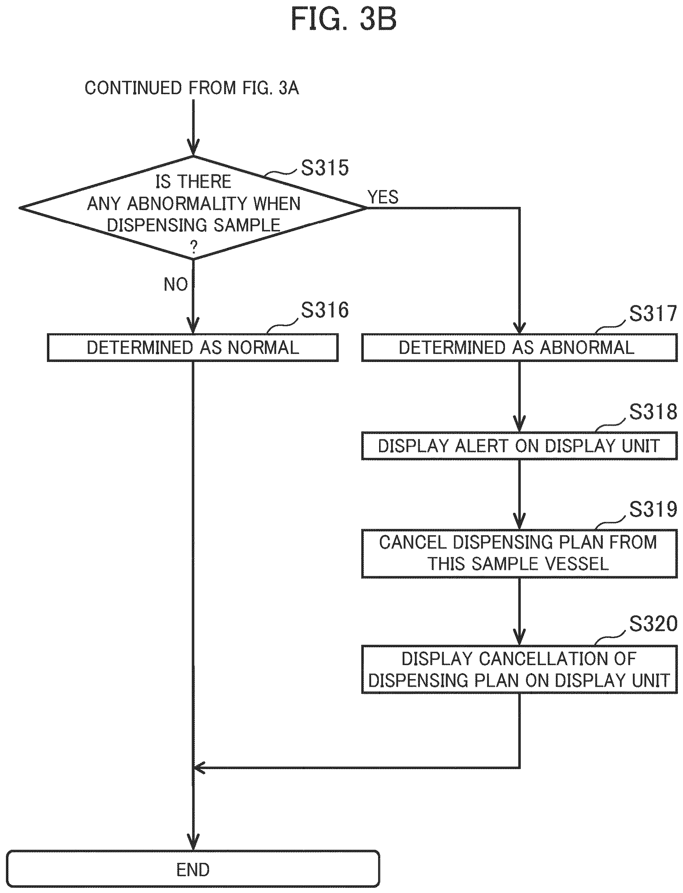

Next, a method of determining an abnormality at the time of dispensing will be described in detail with reference to Figs. 3A and 3B. Figs. 3A and 3B are flowcharts showing the method of determining an abnormality at the time of dispensing. Fig. 3B is a continuation of Fig. 3A. Although the method is performed by the dispensing control unit 108 shown in Fig. 2 controlling the operation of each of the components (the syringe drive unit 106, the probe drive unit 107, the water feed pump 11, the interior washing solenoid valve 111, the exterior washing solenoid valve 125, and the like), each of the components of the dispensing mechanism may be described as the subject of the operation.

In step S301, the probe drive unit 107 moves the dispensing probe 102 with the dispensing tip 18 mounted thereon to a position above the sample vessel 5.

In step S302, the syringe drive unit 106 drives the syringe 104 to aspirate air. In this case, the detection unit 117 detects a pressure waveform in the passage 103 within a predetermined time range in which the operation of aspirating air is performed by the syringe 104, and the result of the detection is stored in the storage unit 119 as a second waveform for faulty aspiration determination. In the present description, a "pressure waveform" indicates data in which pressure values are chronologically arranged.

In step S303, the probe drive unit 107 lowers the dispensing probe 102 until the distal end of the dispensing tip 18 is immersed in the sample 115.

In step S304, the detection unit 117 detects a pressure waveform in the passage 103 within a predetermined time range in which the syringe 104 is in a stopped state before aspiration of the sample 115, and the result of the detection is stored in the storage unit 119 as a second waveform for clogging determination. Thereafter, the syringe drive unit 106 drives the syringe 104 and aspirates, into the dispensing tip 18, the sample 115 in a third predetermined amount that is greater than a first predetermined amount by a second predetermined amount. The first predetermined amount is the amount of the sample used for analysis. In this case, the detection unit 117 detects a pressure waveform in the passage 103 within a predetermined time range in which the operation of aspirating the sample 115 is performed, and the result of the detection is stored in the storage unit 119 as a first waveform.

In step S305, the probe drive unit 107 raises the dispensing probe 102 to separate the distal end of the dispensing tip 18 from the liquid surface of the sample 115.

In step S306, the syringe drive unit 106 drives the syringe 104 to aspirate air.

In step S307, the probe drive unit 107 moves the dispensing probe 102 to a position above the washing chamber 13.

In step S308, the probe drive unit 107 lowers the dispensing probe 102 to a position where the distal end of the dispensing tip 18 contacts the wash water.

In step S309, the syringe drive unit 106 drives the syringe 104 to discharge air and the sample 115 in the second predetermined amount into the washing chamber 13. A discharge position where the sample 115 in the second predetermined amount is discharged may be a vessel for storing liquid, a vessel for discarding liquid, or the reaction vessel 2, but it is effective that the discharge position is the washing chamber 13 where the dispensing probe 102 is positioned for exterior washing. In addition, the timing of discharging the sample 115 in the second predetermined amount is not limited to step S309, but may be any timing in steps S308 to S310.

In step S310, the dispensing control unit 108 opens the exterior washing solenoid valve 125 and drives the water feed pump 11 to discharge the wash water 105 from the exterior washing nozzle 123, thereby washing the outside of the dispensing tip 18 mounted on the dispensing probe 102. In this case, the probe drive unit 107 raises the dispensing probe 102.

In step S311, the probe drive unit 107 moves the dispensing probe 102 to a position above the reaction vessel 2.

In step S312, the probe drive unit 107 lowers the dispensing probe 102 to a position for discharging into the reaction vessel 2.

In step S313, the syringe drive unit 106 drives the syringe 104 to discharge the sample 115 in the first predetermined amount and the reagent 113 held in the dispensing tip 18. In the present embodiment, the third predetermined amount that is the amount of the sample 115 aspirated in step S304 is assumed to be only the sum of the first predetermined amount and the second predetermined amount, but may be an amount obtained by adding a fourth predetermined amount to the sum of the first predetermined amount and the second predetermined amount. In this case, the sample in the fourth predetermined amount remains in the dispensing tip 18 or the dispensing probe 102 even after step S213 and is discharged to the washing chamber 13 or the like.

In step S314, the probe drive unit 107 moves the dispensing probe 102 to the dispensing tip disposal position 23, removes the dispensing tip 18 from the dispensing probe 102, and discards the dispensing tip 18 into the dispensing tip/reaction vessel disposal box 21.

In step S315, the calculation unit 120 of the determining unit 121 determines, based on a pressure waveform at the time of sample aspiration stored in the storage unit 119, whether an abnormality such as faulty aspiration that is a state in which the aspiration of the sample by the dispensing mechanism is insufficient or clogging that is a state in which the sample is clogged in the dispensing mechanism is present at the time of the aspiration of the sample 115. The pressure waveform when the abnormality such as the faulty aspiration or the clogging at the time of the aspiration of the sample 115 is significantly different from a pressure waveform when normal aspiration is performed. Therefore, it is possible to determine whether an abnormality is present by referring to the waveform. A method of determining whether an abnormality is present by using a waveform will be described later. In step S315, the determining unit 121 transmits the result of determining whether an abnormality is present to the display unit 126 and the dispensing control unit 108, and the display unit 126 displays the received result of the determination.

In step S315, if it is determined that it is normal (abnormality is not present) (No), the operation proceeds to step S316. In step S316, the dispensing control unit 108 determines, based on the result of the determination received from the determining unit 121, that the dispensing has normally ended, and ends the dispensing operation.

On the other hand, in step S315, if it is determined that an abnormality is present (Yes), the operation proceeds to step S317. In step S317, the dispensing control unit 108 determines, based on the result of the determination received from the determining unit 121, that an abnormality is present at the time of the aspiration of the sample 115, and then causes the operation to proceed to step S318.

In step S318, the dispensing control unit 108 causes the display unit 126 to display an alert and causes the operation to proceed to step S319.

In step S319, the dispensing control unit 108 ends the operation of the dispensing the sample 115 that has been determined to have the abnormality at the time of the dispensing in step S317, and cancels a plan to dispense the sample 115 from the sample vessel 5. By cancelling the plan to dispense the sample 115 with the abnormality, it is possible to reduce consumption of a reagent to be used for subsequent analysis.

In step S320, the dispensing control unit 108 causes the display unit 126 to display that the plan to dispense the sample 115 has been cancelled.

When a request for next analysis is provided, the above-described steps S301 to S320 are repeated. The processing of determining whether an abnormality is present in steps S315 to S320 may be performed before the processing in steps S305 to S314 or may be performed in parallel with the processing in steps S305 to S314. In these cases, if it is determined that an abnormality is present, the dispensing control unit 108 executes step S305 and step S306 and then ends the dispensing operation without causing the operation to proceed to step S307. Therefore, the sample 115 with the abnormality does not need to be discharged into the reaction vessel 2, and thus it is possible to reduce consumption or cleaning of the reaction vessel 2.

Details of the abnormality determination in step S315 in Fig. 3A will be described below. There are two main abnormalities to be determined, which are faulty aspiration and clogging at the time of sample aspiration, and these abnormalities will be described using a first embodiment and a second embodiment, respectively. In either case of abnormality, the calculation unit 120 of the determining unit 121 calculates a determination index based on a pressure waveform at the time of sample aspiration, and determines, based on the determination index, whether an abnormality is present at the time of sample aspiration.

In the present description, examples of the "determination index" include the mean of pressure values during the operation of aspirating the sample 115, the total or the mean of pressure values before or after the operation of aspirating the sample 115, the maximum value or the minimum value among the pressure values, a pulsation period or amplitude of a pressure waveform, a statistic distance (Euclidean distance or the like) between a reference pressure waveform set in advance and the pressure waveform obtained in this step. In the present description, the "reference pressure waveform" is, for example, a waveform set using a large number of pressure values obtained in the past, and a pressure value when it is determined that the sample has been normally aspirated may be used or a pressure value when it is determined that an abnormality is present at the time of the sample aspiration may be used. The degree of similarity or dissimilarity with this reference pressure waveform can also be used as the determination index. A combination of a plurality of such determination indices obtained may be used as the determination index.

First Embodiment

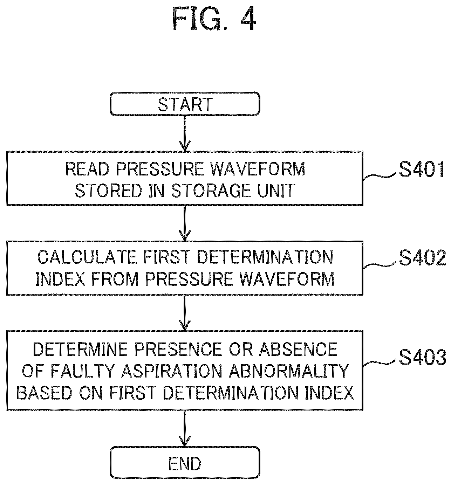

Fig. 4 is a flowchart showing a faulty aspiration determination method in the abnormality determination in step S315 shown in Fig. 3A.

In step S401, the calculation unit 120 reads the first waveform and the second waveform for faulty aspiration determination stored in the storage unit 119.

In step S402, the calculation unit 120 calculates, based on the first waveform and the second waveform for faulty aspiration determination, a first determination index to be used to determine whether faulty aspiration has been performed. In this case, in the present embodiment, as the first determination index, a difference between a mean value in a predetermined section of the first waveform detected in step S304 and a mean value in a predetermined section of the second waveform for faulty aspiration determination detected in step S302 (the difference is a value obtained by subtracting the latter mean value from the former mean value) is used. As the first determination index, an index calculated by a method other than the above-described method may be used.

In step S403, the calculation unit 120 determines, based on the first determination index, whether faulty aspiration has been performed at the time of the aspiration of the sample 115. Examples of the method of determining whether faulty aspiration has been performed include a method of comparing the first determination index with a predetermined threshold and a method of determining that an abnormality is present when a combination of a plurality of first determination indices satisfies a certain condition. In the present embodiment, the former method, that is, the method of comparing the first determination index with the predetermined threshold is used to determine whether an abnormality of faulty aspiration is present.

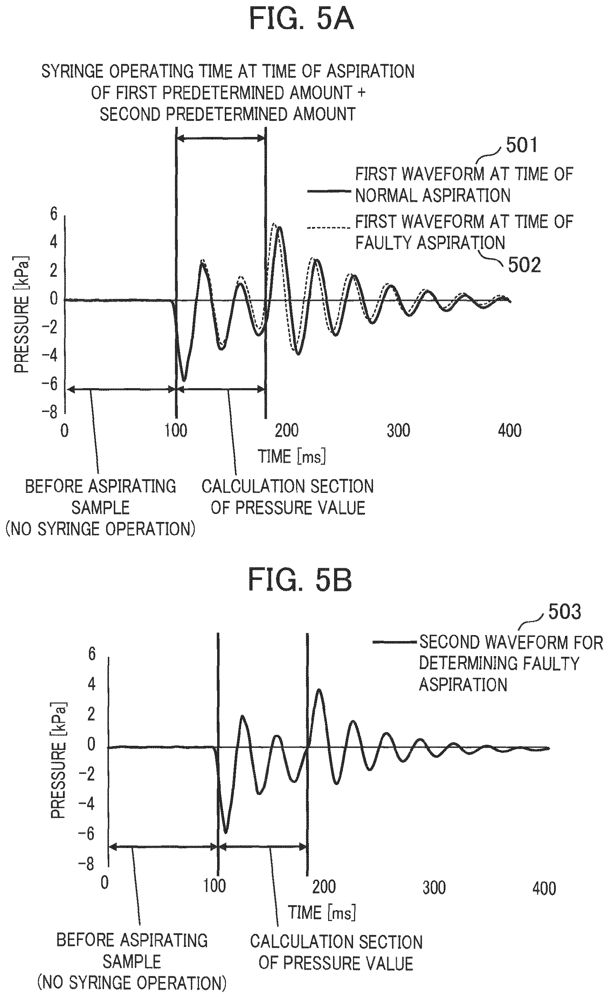

Fig. 5A is a diagram showing a first waveform at the time of normal aspiration and a first waveform at the time of faulty aspiration for a sample in an amount that is greater than the first predetermined amount by the second predetermined amount. A first waveform 502 at the time of faulty aspiration shifts in a positive direction on a pressure axis as compared with a first waveform 501 at the time of normal aspiration. Therefore, the first determination index at the time of normal aspiration is a value less than the first determination index at the time of faulty aspiration.

Fig. 5B is a diagram showing an example of the second waveform for faulty aspiration determination. A second waveform 503 for faulty aspiration determination is obtained in step S302, and thus it can be said that the second waveform 503 for faulty aspiration determination is not affected by faulty aspiration and normal aspiration.

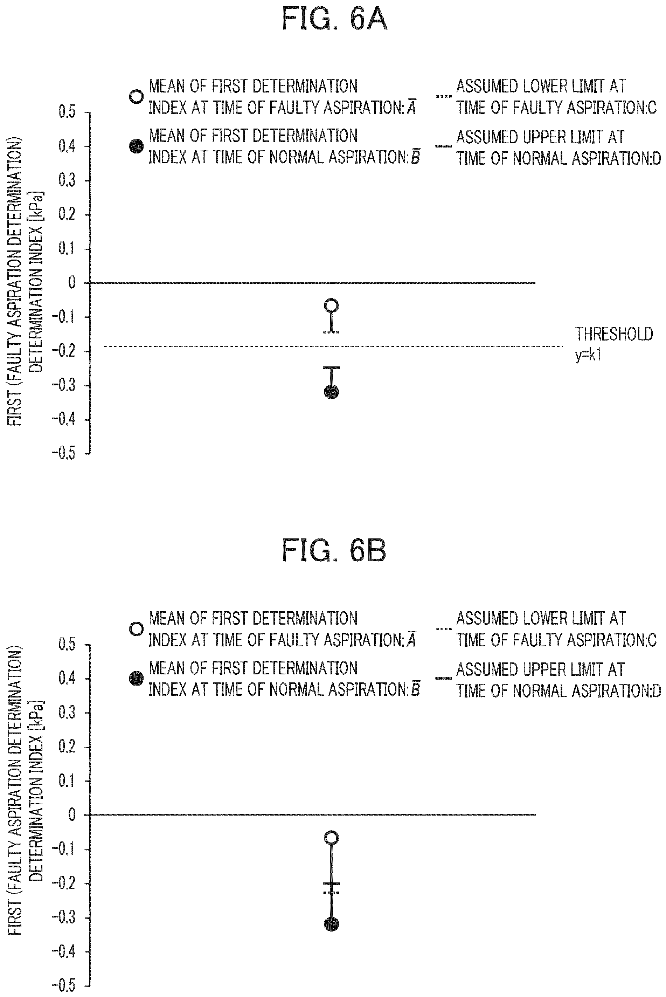

Next, a method of setting a threshold for faulty aspiration determination will be described with reference to Figs. 6A and 6B. In the following, a first determination index at the time of faulty aspiration is A, a first determination index at the time of normal aspiration is B, a mean of the first determination index A is $A^-$, a mean of the first determination index B is $B^-$, and a threshold (first threshold) for faulty aspiration determination is a constant k1. In addition, a lower limit value among values assumed as the first determination index A is a lower limit value C assumed at the time of faulty aspiration. As the lower limit value C assumed at the time of faulty aspiration, a lower limit value of a distribution of data at the time of faulty aspiration obtained in the past may be set. However, if an error is allowable, a lower limit value may be set such that certain data among the data at the time of faulty aspiration is included. An upper limit value among values assumed as the first determination index B is an upper limit value D assumed at the time of normal aspiration. As the upper limit value D assumed at the time of normal aspiration, an upper limit value of the distribution of the data at the time of normal aspiration obtained in the past may be set. However, if an error is allowable, an upper limit value may be set such that certain data among the data at the time of faulty aspiration is included. The first threshold may be a function such as $y = f(x)$. The variable x may indicate an amount dispensed, a temperature, or the x-th dispensing when the dispensing operation is continued, or may be a calibration value calculated for each of devices to eliminate a difference between the devices. In addition, the variable x is not limited to one variable and may be a plurality of variables.

Fig. 6A is a diagram showing an example in which the first threshold (threshold for faulty aspiration determination) can be set. As shown in Fig. 6A, when $A^- > B^-$ and $C > D$, a constant k1 can be set between C and D as the first threshold, and thus it is possible to accurately determine faulty aspiration and normal aspiration. Specifically, in a case where the first determination index is greater than the first threshold, aspiration is determined to be faulty aspiration. In a case where the first determination index is less than the first threshold, aspiration is determined to be normal aspiration.

In a case where the method of calculating the first determination index is different, the method of setting the first threshold and the method of determining faulty aspiration are different. For example, in a case where the first determination index is a value greater at the time of normal aspiration than at the time of faulty aspiration and is used, the upper limit value assumed at the time of faulty aspiration is C', and the lower limit value assumed at the time of normal aspiration is D', when A⁻ < B⁻, and C' < D', the first threshold can be set between C' and D'. In this case, in a case where the first determination index is less than the first threshold, aspiration can be determined to be faulty aspiration, and in a case where the first determination index is greater than the first threshold, aspiration can be determined to be normal aspiration.

Fig. 6B is a diagram showing an example in which it is not possible to set the first threshold (threshold for faulty aspiration determination).

As shown in Fig. 6B, when A⁻ > B⁻ and C < D, it is not possible to set the first threshold between C and D and thus it is difficult to determine faulty aspiration and normal aspiration. In a case where the first threshold index is a value greater at the time of normal aspiration than at the time of faulty aspiration and is used, when A⁻ < B⁻ and C' > D', it is not possible to set the first threshold between C' and D' and it is difficult to determine faulty aspiration and normal aspiration.

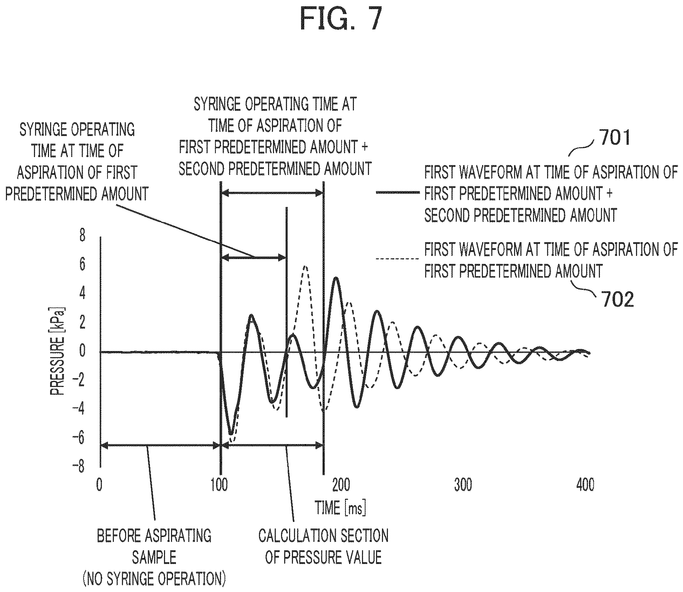

Fig. 7 is a diagram showing an example of a first waveform when the sample in an amount that is greater than the first predetermined amount by the second predetermined amount is normally aspirated, and a first waveform when the sample in the first predetermined amount is normally aspirated. When the speed at which the sample 115 is aspirated is the same, a first waveform 702 when the sample in the first predetermined amount is aspirated indicates the end of aspiration earlier than that indicated by a first waveform 701 when the sample in the amount that is greater than the first predetermined amount by the second predetermined amount is aspirated. Therefore, in addition to a pressure waveform reflecting characteristics during the aspiration operation, a pressure waveform reflecting characteristics after the end of the aspiration is included in a calculation section of pressure values. Therefore, a pressure value calculated from the first waveform 702 is greater than a pressure value calculated from the first waveform 701. In addition, pressure waveforms after the end of the aspiration significantly vary. Therefore, if the pressure waveforms after the end of the aspiration are included, a variation in the first determination index is large and the accuracy of the determination is reduced.

It can be considered that the calculation section is reduced such that the pressure waveforms after the end of the aspiration are not included. However, when the calculation section is reduced based on the amount of the sample aspirated, the pressure waveform reflecting the characteristics during the aspiration operation is shortened and the accuracy of the determination is reduced.

In addition, by decreasing the aspiration speed, it is possible to lengthen the time required to obtain the pressure waveform at the time of the aspiration. However, in this case, a frictional pressure loss is reduced according to the following Equation 1, and the difference between a pressure value at the time of faulty aspiration and a pressure value at the time of normal aspiration decreases. In Equation 1, $\Delta P$ is the frictional pressure loss, $\lambda$ is a piping friction coefficient, L is a length of piping, d is a diameter of the piping, $\rho$ is a fluid density, and u is an average flow velocity.

[Equation 1]

$$\Delta P = \lambda \cdot \frac{L}{d} \cdot \frac{\rho \cdot u^2}{2} \qquad \cdots \qquad (\text{Equation 1})$$

On the other hand, in a case where the dispensing tip 18 is made thinner, that is, in a case where the diameter d of the piping is decreased, the frictional pressure loss increases according to Equation 1, the difference between the pressure value at the time of faulty aspiration and the pressure value at the time of normal aspiration increases, and the accuracy of the determination is improved.

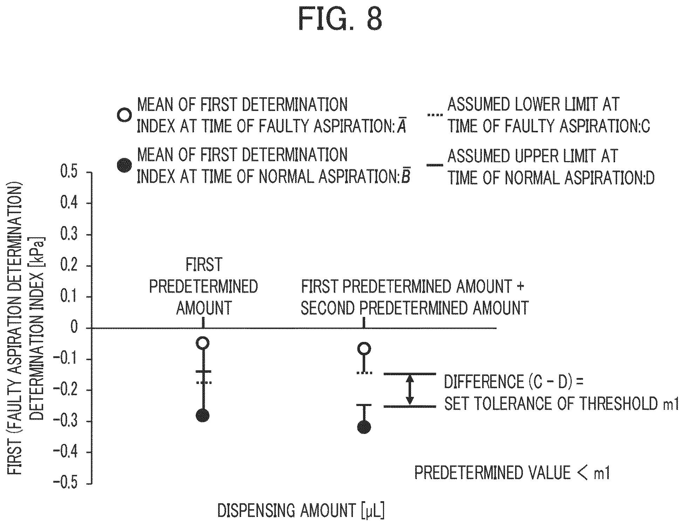

Fig. 8 is a diagram showing an example of a set tolerance for the first threshold (threshold for faulty aspiration determination).

When the sample 115 in the amount that is the sum of the first predetermined amount and the second predetermined amount is aspirated into the dispensing tip 18, A⁻ > B⁻ and C > D, and the difference between C and D, that is, a set tolerance m1 for the first threshold is greater than a predetermined value. Therefore, it is possible to reliably distinguish an index region at the time of faulty aspiration and an index region at the time of normal aspiration, and the accuracy of the determination is improved. In a case where the first determination index is a value greater at the time of normal aspiration than at the time of faulty aspiration and is used, A⁻ < B⁻ and C' < D', the difference between C' and D' is greater than a predetermined value, and thus the accuracy of the determination is similarly improved.

On the other hand, when the sample 115 in the first predetermined amount is aspirated into the dispensing tip 18, the state is in either one of the following states. As shown in Fig. 8, the first state is a state in which A⁻ > B⁻ and C < D, the set tolerance m1 is not present, and the index region at the time of faulty aspiration partially overlaps the index region at the time of normal aspiration. Although not shown, the second state is a state in which A⁻ > B⁻ and C > D, the set tolerance m1 is present but is less than the predetermined value, the index region at the time of faulty aspiration is close to the index region at the time of normal aspiration, and a variation in the first determination index may result in erroneous determination. Therefore, when the sample 115 in the first predetermined amount is aspirated, the accuracy of the determination is reduced, as compared to a case where the sample 115 in the amount that is the sum of the first predetermined amount and the second predetermined amount is aspirated. In a case where the first determination index is a value greater at the time of normal aspiration than at the time of faulty aspiration and is used, the state is a state in which $A^- < B^-$ and $C' > D'$ or a state in which $A^- < B^-$ and $C' < D'$ but the difference between C' and D' is less than the predetermined value, and the accuracy of the determination is similarly reduced.

In the present embodiment, the sample in the amount greater than the first predetermined amount, which is the amount of the sample used for the analysis, by the second predetermined amount is aspirated and determination as to whether aspiration is faulty aspiration or normal aspiration is performed. Therefore, even in a case where the amount is less than the first predetermined amount, highly accurate determination can be performed without modifying the device, such as using a highly sensitive pressure sensor or thinning the tip. In addition, according to the present embodiment, it is not necessary to set a calculation section for each first predetermined amount and change a threshold for each first predetermined amount. That is, according to the present embodiment, there is an advantage that the method of calculating the first determination index, and the threshold can be common regardless of the amount of the sample used for the analysis.

Second Embodiment

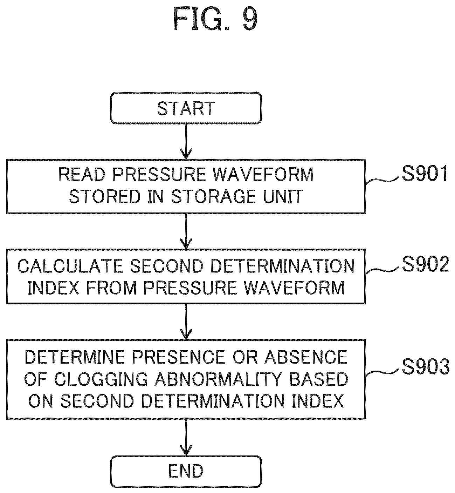

Fig. 9 is a flowchart showing a method of determining clogging in the abnormality determination in step S315 shown in Fig. 3A.

In step S901, the calculation unit 120 reads the first waveform and the second waveform for clogging determination stored in the storage unit 119.

In step S902, the calculation unit 120 calculates a second determination index to be used to determine whether clogging has occurred, based on the first waveform and the second waveform for clogging determination. In the present embodiment, as the second determination index, the difference between an integrated value in the predetermined section of the first waveform detected in step S304 and a value obtained by multiplying the mean value of the second waveform for clogging determination detected in step S304 by the number of data points in an integration range for the first waveform (the difference is the value obtained by subtracting the former value from the latter value) is used. As the second determination index, a value calculated by a method other than the above-described method may be used.

In step S903, the calculation unit 120 determines, based on the second determination index, whether clogging has occurred at the time of aspiration of the sample 115. Examples of the method of determining whether clogging has occurred include a method of comparing the second determination index with a predetermined threshold and a method of determining that an abnormality has occurred when a combination of a plurality of second determination indices satisfies a certain condition. In the present embodiment, the former method, that is, the method of comparing the second determination index with the predetermined threshold is used to determine whether an abnormality of clogging has occurred.

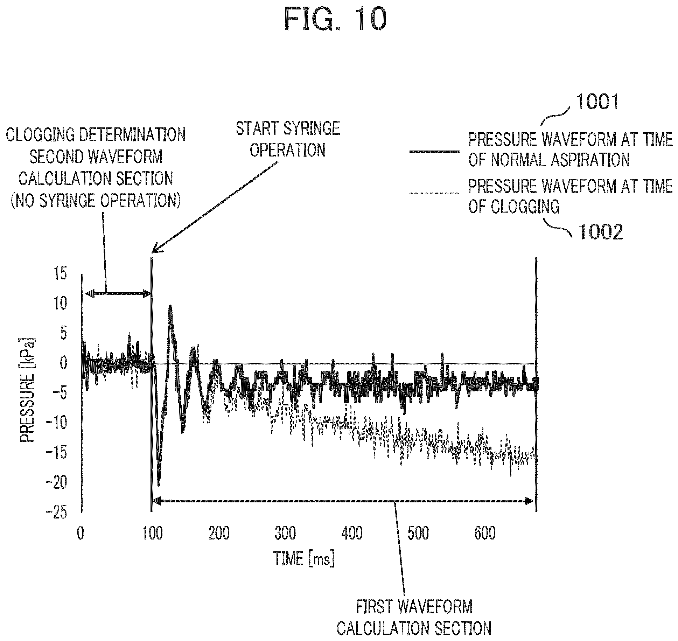

Fig. 10 is a diagram illustrating an example of pressure waveforms (first waveform and second waveform for clogging determination) at the time of normal aspiration and at the time of clogging. A first waveform in a pressure waveform 1002 at the time of clogging drifts in a negative direction on a pressure axis as compared with a pressure waveform 1001 at the time of normal aspiration. Therefore, a second determination index at the time of normal aspiration is a value less than a second determination index at the time of clogging. The second waveform for clogging determination is acquired before the aspiration of the sample 115, and thus it can be said that the second waveform for clogging determination is not affected by clogging and normal aspiration.

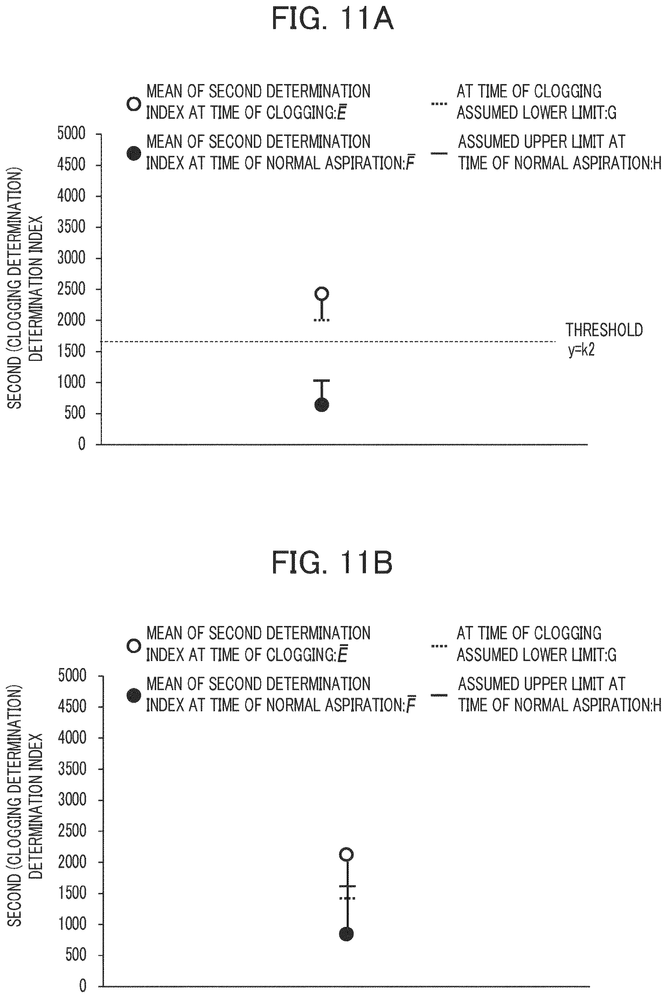

Next, a method of setting a threshold for clogging determination will be described with reference to Figs. 11A and 11B. In the following, the second determination index at the time of clogging is E, the second determination index at the time of normal aspiration is F, the mean of the second determination index E is E-, the mean of the second determination index F is F-, and a threshold (second threshold) for clogging determination is a constant k2. In addition, a lower limit value among values assumed as the second determination index E is a lower limit value G assumed at the time of clogging. As the lower limit value G assumed at the time of clogging, a lower limit value of a distribution of data at the time of clogging that has been obtained in the past may be set. However, if an error is allowable, a lower limit value may be set such that certain data among the data at the time of clogging is included. An upper limit value among values assumed as the second determined index F is an upper limit value H assumed at the time of normal aspiration. As the upper limit value H assumed at the time of normal aspiration, an upper limit value of the distribution of the data at the time of normal aspiration obtained in the past may be set. However, if an error is allowable, an upper limit value may be set such that certain data among the data at the time of normal aspiration is included. In addition, the second threshold may be a function such as $y = f(x)$. The variable x may indicate an amount dispensed, a temperature, or the x-th dispensing when the dispensing operation is continued, or may be a calibration value calculated for each of devices to eliminate a difference between the devices. In addition, the variable x is not limited to one variable and may be a plurality of variables.

Fig. 11A is a diagram showing an example in which it is possible to set the second threshold (threshold for clogging determination). As illustrated in Fig. 11A, when E- > F- and G > H, the constant k2 can be set as a second threshold between G and H, it is possible to accurately determine clogging and normal aspiration. Specifically, it is possible to determine clogging when the second determination index is greater than the second threshold, and it is possible to determine normal aspiration when the second determination index is less than the second threshold.

When the method of calculating the second determination index is different, the method of setting the second threshold and the method of determining clogging are different. For example, in a case where the second determination index is a value greater at the time of normal aspiration than at the time of clogging and is used, an upper limit value assumed at the time of clogging is G', a lower limit value assumed at the time of normal aspiration is H', E- < F-, and G' < H', the second threshold can be set between G' and H'. In this case, it is possible to determine clogging when the second determination index is less than the second threshold, and it is possible to determine normal aspiration when the second determination index is greater than the second threshold.

Fig. 11B is a diagram illustrating an example in which it is not possible to set the second threshold (threshold for clogging determination). As illustrated in Fig. 11B, when E- > F- and G < H, it is not possible to set the second threshold between G and H, and thus it is difficult to determine clogging and normal aspiration. In a case where the second determination index is a value greater at the time of normal aspiration than at the time of clogging and is used, E- < F-, and G' > H', it is not possible to set the first threshold between G' and H' and it is difficult to determine clogging and normal aspiration.

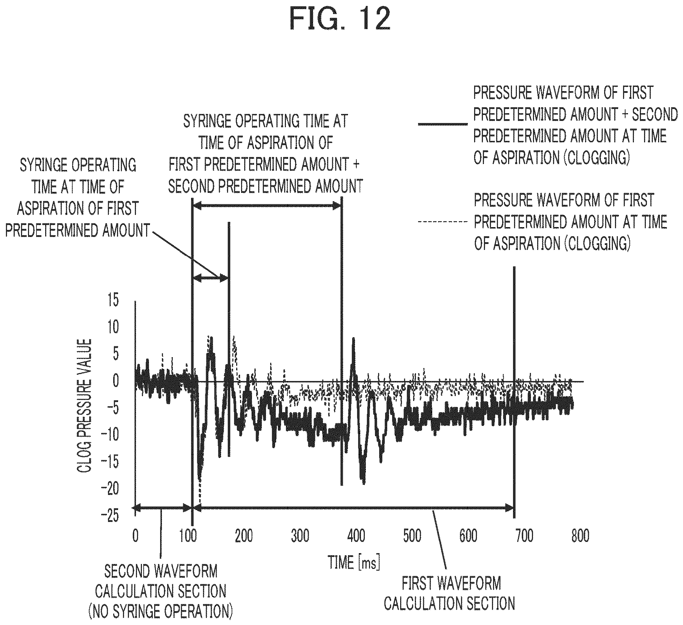

Fig. 12 is a diagram illustrating an example of a pressure waveform when the sample in an amount greater than the first predetermined amount by the second predetermined amount is aspirated and clogging occurs, and a pressure waveform when the sample in the first predetermined amount is aspirated and clogging occurs. When the piping is clogged with fiber or the like included in blood, the diameter of the piping is decreased and the frictional pressure loss is increased. When the amount aspirated is large, a period of time for aspiration from when the piping becomes clogged is long. Therefore, it is possible to acquire, for a long time, a waveform in a state in which the piping is clogged, that is, a waveform that drifts in a negative direction on a pressure axis. On the other hand, when the amount aspirated is small, a period of time for aspiration is short and a waveform in a state in which the piping is clogged is short.

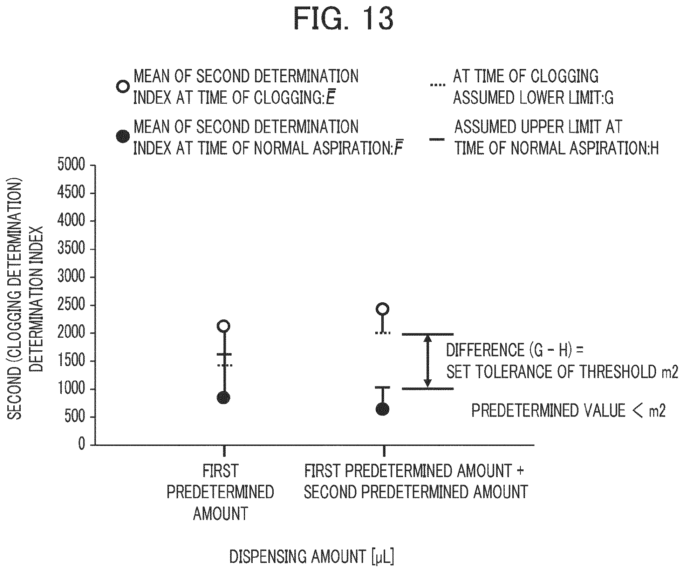

Fig. 13 is a diagram illustrating an example of a set tolerance for the second threshold (threshold for clogging determination).

In a case where the sample 115 in an amount that is the sum of the first predetermined amount and the second predetermined amount is aspirated into the dispensing tip 18, E- > F-, G > H, and the difference between G and H, that is, a set tolerance m2 for the second threshold is greater than a predetermined value. Therefore, it is possible to reliably determine an index region at the time of clogging and an index region at the time of normal aspiration, and the accuracy of the determination is improved. Even in a case where the second determination index is a value greater at the time of normal aspiration than at the time of clogging and is used, E- < F- and G' < H', the difference between G' and H' is greater than a predetermined value, and thus the accuracy of the determination is similarly improved.

On the other hand, when the sample 115 in the first predetermined amount is aspirated into the dispensing tip 18, the state is in either one of the following states. As illustrated in Fig. 13, the first state is a state in which E- > F- and G < H, the set tolerance m2 is not present, and the index region at the time of clogging partially overlaps the index region at the time of normal aspiration. Although not illustrated, the second state is a state in which the E- > F- and G > H, the set tolerance m2 is present but less than the predetermined value, the index region at the time of clogging is close to the index region at the time of normal aspiration, and an erroneous determination may be performed depending on a variation in the second determination index. Therefore, when the sample 115 in the first predetermined amount is aspirated, the accuracy of the determination is reduced, as compared to a case where the sample 115 in the amount that is the sum of the first predetermined amount and the second predetermined amount is aspirated. Also in a case where the second determination value is a value greater at the time of normal aspiration than at the time of clogging and is used, the state is either a state in which E- < F- and G' > H' or a state in which E- < F- and G' < H' but the difference between G' and H' is less than the predetermined value, and the accuracy of the determination is similarly reduced.

Therefore, in the present embodiment, the sample in the amount that is greater by the second predetermined amount than the first predetermined amount that is the amount of the sample used for the analysis is aspirated and the determination as to whether the aspiration causes clogging or is normal aspiration is performed. Therefore, even in a case where the amount is less than the first predetermined amount, highly accurate determination can be performed without modifying the device, such as using a highly sensitive pressure sensor or thinning the tip. In addition, according to the present embodiment, it is not necessary to set a calculation section for each first predetermined amount and change a threshold for each first predetermined amount. That is, according to the present embodiment, there is an advantage that the method of calculating the second determination index, and the threshold can be common regardless of the amount of sample used for the analysis.

Although the above describes the first embodiment and the second embodiment as examples, it is also possible to replace part of the configuration of one of the embodiments with the configuration of the other embodiment, and it is also possible to add, to the configuration of one of the embodiments, the configuration of the other embodiment. The present invention is not limited to the embodiments and includes various modifications.

For example, in each of the embodiments, the determination index is calculated based on the difference between the second waveform and the first waveform, but it is possible to obtain a certain degree of the accuracy of the determination even if the determination index is calculated based on only the first waveform. In a case where analysis request items include a first analysis item in which the first predetermined amount is less than the second threshold, and a second analysis item in which the first predetermined amount is greater than the second threshold, the dispensing unit may be controlled for the first analysis item as in each of the embodiments, and the dispensing unit may be controlled to aspirate and discharge only the sample in the first predetermined amount for the second analysis item.

List of Reference Signs

| | |
|---|---|
| 1 | reaction disk |
| 2 | reaction vessel |
| 3 | reagent and sample common housing unit |
| 4 | reagent vessel |
| 5 | sample vessel |
| 6 | reagent aspiration position |
| 7 | sample aspiration position |
| 8 | first dispensing mechanism |
| 9 | second dispensing mechanism |
| 10, 11 | water feed pump |
| 12, 13 | washing chamber |
| 15 | spectrophotometer |
| 16 | detecting mechanism |
| 17 | dispensing tip/reaction vessel transfer mechanism |
| 18 | dispensing tip |
| 19 | dispensing tip tray |
| 20 | reaction vessel tray |
| 21 | dispensing tip/reaction vessel disposal box |
| 22 | dispensing tip mounting position |
| 23 | dispensing tip disposal position |
| 28 | control unit |
| 102 | dispensing probe |
| 103 | passage |
| 104 | syringe |
| 104a | cylinder |
| 104b | plunger |
| 105 | wash water |
| 106 | syringe drive unit |
| 107 | probe drive unit |
| 108 | dispensing control unit |
| 110 | water supply tank |
| 111 | interior washing solenoid valve |
| 113 | reagent |
| 115 | sample |
| 117 | detection unit |
| 118 | branch block |
| 119 | storage unit |
| 120 | calculation unit |
| 121 | determining unit |
| 123 | exterior washing nozzle |
| 125 | exterior washing solenoid valve |
| 126 | display unit |

**Claims**

1. An automatic analyzer comprising:

   a dispensing unit that aspirates a sample from a sample vessel that houses the sample;
   a control unit that controls the dispensing unit such that the dispensing unit aspirates the sample in a third predetermined amount greater than a first predetermined amount that is an amount of the sample used for analysis, the dispensing unit discharges the sample in a second predetermined amount to a predetermined site different from the sample vessel, and the dispensing unit discharges the sample in the first predetermined amount to a reaction vessel used for analysis;
   a detection unit that detects a pressure waveform in the dispensing unit; and
   a determining unit that determines faulty aspiration and/or clogging, based on a first waveform that is the pressure waveform when the dispensing unit aspirates the sample, the faulty aspiration being a state in which the dispensing unit insufficiently aspirates the sample, the clogging being a state in which the sample is clogged in the dispensing unit.

2. The automatic analyzer according to claim 1,
   wherein the determining unit calculates a difference between a second waveform that is a pressure waveform before the dispensing unit aspirates the sample and the first waveform, and the determining unit determines the faulty aspiration and/or the clogging, based on the difference.

3. The automatic analyzer according to claim 1,

   wherein: the determining unit calculates a determination index based on the first waveform, and the determining unit determines the faulty aspiration and/or the clogging when the determination index is greater than a first threshold; and
   the first threshold is set in advance such that the first threshold is greater than an assumed upper limit of the determination index when the dispensing unit normally aspirates the sample and the first threshold is smaller than an assumed lower limit of the determination index at the faulty aspiration and/or the clogging.

4. The automatic analyzer according to claim 3,

   wherein: when the sample in the first predetermined amount is aspirated, the assumed lower limit at the faulty aspiration and/or the clogging is smaller than the assumed upper limit in the normal state, or the assumed lower limit at the faulty aspiration and/or the clogging is greater than the assumed upper limit in the normal state and a difference between the assumed lower limit and the assumed upper limit is smaller than a predetermined value; and
   when the sample in the third predetermined amount is aspirated, the assumed lower limit at the faulty aspiration and/or the clogging is greater than the assumed upper limit in the normal state and a difference between the assumed lower limit and the assumed upper limit is greater than the predetermined value.

5. The automatic analyzer according to claim 1,

   wherein: the determining unit calculates a determination index based on the first waveform, and the determining unit determines the faulty aspiration and/or the clogging when the determination index is smaller than a first threshold; and
   the first threshold is set in advance such that the first threshold is smaller than an assumed lower limit of the determination index when the dispensing unit normally aspirates the sample and the first threshold is greater than an assumed upper limit of the determination index at the faulty aspiration and/or the clogging.

6. The automatic analyzer according to claim 5,

   wherein: when the sample in the first predetermined amount is aspirated, the assumed upper limit at the faulty aspiration and/or the clogging is greater than the assumed lower limit in the normal state, or the assumed upper limit at the faulty aspiration and/or the clogging is smaller than the assumed lower limit in the normal state and a difference between the assumed upper limit and the assumed lower limit is smaller than a predetermined value; and
   when the sample in the third predetermined amount is aspirated, the assumed upper limit at the faulty aspiration

EP 4 718 077 A1

and/or the clogging is smaller than the assumed lower limit in the normal state and a difference between the assumed upper limit and the assumed lower limit is greater than the predetermined value.

7. The automatic analyzer according to claim 1, further comprising a washing chamber that washes the dispensing unit, wherein the control unit discharges the sample in the second predetermined amount to the washing chamber.

8. The automatic analyzer according to claim 1,

wherein: an analysis request item includes a first analysis item in which the first predetermined amount is smaller than a second threshold and a second analysis item in which the first predetermined amount is greater than the second threshold;
when the analysis request item is the first analysis item, the control unit controls the dispensing unit such that the dispensing unit aspirates the sample in the third predetermined amount, the dispensing unit discharges the sample in the second predetermined amount to a predetermined site different from the sample vessel, and the dispensing unit discharges the sample in the first predetermined amount to the reaction vessel; and
when the analysis request item is the second analysis item, the control unit controls the dispensing unit such that the dispensing unit aspirates the sample in the first predetermined amount, and the dispensing unit discharges the sample in the first predetermined amount to the reaction vessel.

9. An analysis method for an automatic analyzer including a dispensing unit that aspirates a sample from a sample vessel that houses the sample, a control unit that controls the dispensing unit such that the dispensing unit discharges the sample to a reaction vessel used for analysis, a detection unit that detects a pressure waveform in the dispensing unit, and a determining unit that determines faulty aspiration being a state in which the dispensing unit insufficiently aspirates the sample and/or clogging being a state in which the sample is clogged in the dispensing unit,

wherein: the control unit controls the dispensing unit such that the dispensing unit aspirates the sample in a third predetermined amount greater than a first predetermined amount that is an amount of the sample used for analysis, the dispensing unit discharges the sample in a second predetermined amount to a predetermined site different from the sample vessel, and the dispensing unit discharges the sample in the first predetermined amount to a reaction vessel used for analysis; and
the determining unit determines the faulty aspiration and/or the clogging, based on a first waveform that is the pressure waveform when the dispensing unit aspirates the sample.

# FIG. 1

# FIG. 2

# FIG. 3A

```
                    START

ROTATE PROBE (MOVE ABOVE SAMPLE VESSEL)          S301

ASPIRATE AIR AND MEASURE PRESSURE GAGE           S302

LOWER PROBE                                      S303

ASPIRATE SAMPLE (FIRST PREDETERMINED AMOUNT +    S304
SECOND PREDETERMINED AMOUNT) AND MEASURE PRESSURE

RAISE PROBE                                      S305

ASPIRATE AIR                                     S306

ROTATE PROBE (MOVE TO WASHING CHAMBER)           S307

LOWER PROBE                                      S308

DISCHARGED (AIR + SAMPLE IN SECOND PREDETERMINED AMOUNT)  S309

WASH OUTER SIDE AND RAISE PROBE                  S310

ROTATE PROBE (MOVE ABOVE REACTION VESSEL)        S311

LOWER PROBE                                      S312

DISCHARGE SAMPLE AND REAGENT TO REACTION VESSEL  S313

DISCARD TIP                                      S314

                    IS THERE                     S315
       ANY ABNORMALITY WHEN DISPENSING SAMPLE
                        ?

            CONTINUE TO FIG. 3B
```

# FIG. 3B

CONTINUED FROM FIG. 3A

S315

IS THERE
ANY ABNORMALITY WHEN
DISPENSING SAMPLE
?

YES

NO

S316

DETERMINED AS NORMAL

S317

DETERMINED AS ABNORMAL

S318

DISPLAY ALERT ON DISPLAY UNIT

S319

CANCEL DISPENSING PLAN FROM
THIS SAMPLE VESSEL

S320

DISPLAY CANCELLATION OF
DISPENSING PLAN ON DISPLAY UNIT

END

17

# FIG. 4

```
        ┌─────────────┐
        │    START    │
        └──────┬──────┘
               ↓
   ┌───────────────────────────┐
   │  READ PRESSURE WAVEFORM    │  ～S401
   │  STORED IN STORAGE UNIT    │
   └───────────┬───────────────┘
               ↓
   ┌───────────────────────────┐
   │  CALCULATE FIRST DETERMINATION │  ～S402
   │  INDEX FROM PRESSURE WAVEFORM  │
   └───────────┬───────────────┘
               ↓
   ┌───────────────────────────────┐
   │  DETERMINE PRESENCE OR ABSENCE  │  ～S403
   │  OF FAULTY ASPIRATION ABNORMALITY │
   │  BASED ON FIRST DETERMINATION INDEX │
   └───────────┬───────────────────┘
               ↓
        ┌─────────────┐
        │     END     │
        └─────────────┘
```

## FIG. 5A

SYRINGE OPERATING TIME AT TIME OF ASPIRATION
OF FIRST PREDETERMINED AMOUNT +
SECOND PREDETERMINED AMOUNT

501
—— FIRST WAVEFORM AT TIME OF
NORMAL ASPIRATION
------- FIRST WAVEFORM AT TIME OF
FAULTY ASPIRATION
502

BEFORE ASPIRATING
SAMPLE
(NO SYRINGE OPERATION)

CALCULATION SECTION
OF PRESSURE VALUE

## FIG. 5B

503
—— SECOND WAVEFORM FOR
DETERMINING FAULTY
ASPIRATION

BEFORE ASPIRATING
SAMPLE
(NO SYRINGE OPERATION)

CALCULATION SECTION
OF PRESSURE VALUE

# FIG. 6A

# FIG. 6B

# FIG. 7

SYRINGE OPERATING
TIME AT TIME OF
ASPIRATION OF FIRST
PREDETERMINED AMOUNT

SYRINGE OPERATING TIME AT
TIME OF ASPIRATION OF
FIRST PREDETERMINED AMOUNT +
SECOND PREDETERMINED AMOUNT

701

FIRST WAVEFORM AT TIME OF ASPIRATION OF
FIRST PREDETERMINED AMOUNT +
SECOND PREDETERMINED AMOUNT

FIRST WAVEFORM AT TIME OF ASPIRATION OF
FIRST PREDETERMINED AMOUNT

702

PRESSURE [kPa]

TIME [ms]

BEFORE ASPIRATING
SAMPLE
(NO SYRINGE OPERATION)

CALCULATION SECTION
OF PRESSURE VALUE

# FIG. 8

○ MEAN OF FIRST DETERMINATION
INDEX AT TIME OF FAULTY ASPIRATION:$\overline{A}$

.... ASSUMED LOWER LIMIT AT
TIME OF FAULTY ASPIRATION:C

● MEAN OF FIRST DETERMINATION
INDEX AT TIME OF NORMAL ASPIRATION:$\overline{B}$

— ASSUMED UPPER LIMIT AT
TIME OF NORMAL ASPIRATION:D

FIRST (FAULTY ASPIRATION DETERMINATION)
DETERMINATION INDEX [kPa]

FIRST
PREDETERMINED
AMOUNT

FIRST PREDETERMINED AMOUNT +
SECOND PREDETERMINED AMOUNT

DIFFERENCE (C − D) =
SET TOLERANCE OF THRESHOLD m1

PREDETERMINED VALUE < m1

DISPENSING AMOUNT [μL]

# FIG. 9

```
┌─────────────────────┐
│        START        │
└─────────────────────┘
            │
            ▼
┌─────────────────────────────┐
│   READ PRESSURE WAVEFORM     │ ───  S901
│   STORED IN STORAGE UNIT     │
└─────────────────────────────┘
            │
            ▼
┌─────────────────────────────┐
│ CALCULATE SECOND DETERMINATION│ ───  S902
│  INDEX FROM PRESSURE WAVEFORM │
└─────────────────────────────┘
            │
            ▼
┌─────────────────────────────┐
│ DETERMINE PRESENCE OR ABSENCE│ ───  S903
│ OF CLOGGING ABNORMALITY BASED│
│ ON SECOND DETERMINATION INDEX│
└─────────────────────────────┘
            │
            ▼
┌─────────────────────┐
│        END          │
└─────────────────────┘
```

# FIG. 10

CLOGGING DETERMINATION
SECOND WAVEFORM
CALCULATION SECTION
(NO SYRINGE OPERATION)

START SYRINGE
OPERATION

1001

——— PRESSURE WAVEFORM AT TIME
OF NORMAL ASPIRATION

-------- PRESSURE WAVEFORM AT TIME
OF CLOGGING

1002

FIRST WAVEFORM
CALCULATION SECTION

# FIG. 11A

○ MEAN OF SECOND DETERMINATION INDEX AT TIME OF CLOGGING:$\bar{E}$

⋯ AT TIME OF CLOGGING ASSUMED LOWER LIMIT:G

● MEAN OF SECOND DETERMINATION INDEX AT TIME OF NORMAL ASPIRATION:$\bar{F}$

— ASSUMED UPPER LIMIT AT TIME OF NORMAL ASPIRATION:H

THRESHOLD $y=k2$

# FIG. 11B

○ MEAN OF SECOND DETERMINATION INDEX AT TIME OF CLOGGING:$\bar{E}$

⋯ AT TIME OF CLOGGING ASSUMED LOWER LIMIT:G

● MEAN OF SECOND DETERMINATION INDEX AT TIME OF NORMAL ASPIRATION:$\bar{F}$

— ASSUMED UPPER LIMIT AT TIME OF NORMAL ASPIRATION:H

EP 4 718 077 A1

# FIG. 12

PRESSURE WAVEFORM OF FIRST
PREDETERMINED AMOUNT + SECOND
PREDETERMINED AMOUNT AT TIME
OF ASPIRATION (CLOGGING)

PRESSURE WAVEFORM OF FIRST
PREDETERMINED AMOUNT AT TIME
OF ASPIRATION (CLOGGING)

SYRINGE OPERATING TIME AT
TIME OF ASPIRATION OF
FIRST PREDETERMINED AMOUNT +
SECOND PREDETERMINED AMOUNT

SYRINGE OPERATING
TIME AT TIME OF
ASPIRATION OF FIRST
PREDETERMINED AMOUNT

SECOND WAVEFORM
CALCULATION SECTION
(NO SYRINGE OPERATION)

FIRST WAVEFORM
CALCULATION SECTION

CLOG PRESSURE VALUE

TIME [ms]

26

# FIG. 13

○ MEAN OF SECOND DETERMINATION INDEX AT TIME OF CLOGGING:$\bar{E}$

● MEAN OF SECOND DETERMINATION INDEX AT TIME OF NORMAL ASPIRATION:$\bar{F}$

.... AT TIME OF CLOGGING ASSUMED LOWER LIMIT:G

— ASSUMED UPPER LIMIT AT TIME OF NORMAL ASPIRATION:H

SECOND (CLOGGING DETERMINATION) DETERMINATION INDEX

5000
4500
4000
3500
3000
2500
2000
1500
1000
500
0

DIFFERENCE (G – H) = SET TOLERANCE OF THRESHOLD m2

PREDETERMINED VALUE ＜ m2

FIRST PREDETERMINED AMOUNT

FIRST PREDETERMINED AMOUNT + SECOND PREDETERMINED AMOUNT

DISPENSING AMOUNT [μL]

## INTERNATIONAL SEARCH REPORT

| International application No. |
|---|
| **PCT/JP2024/017503** |

**A. CLASSIFICATION OF SUBJECT MATTER**

*G01N 35/00*(2006.01)i; *G01N 35/10*(2006.01)i
FI: G01N35/00 F; G01N35/10 D

According to International Patent Classification (IPC) or to both national classification and IPC

**B. FIELDS SEARCHED**

Minimum documentation searched (classification system followed by classification symbols)

G01N35/00; G01N35/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-249585 A (OLYMPUS CORPORATION) 15 September 2005 (2005-09-15) paragraphs [0031]-[0033], fig. 3 | 1-3, 5, 7-9 |
| A | | 4,6 |
| Y | JP 2002-333449 A (HITACHI, LTD.) 22 November 2002 (2002-11-22) paragraphs [0021]-[0030], fig. 1, 3 | 1, 3, 5, 7-9 |
| A | | 4, 6 |
| Y | JP 2004-271266 A (HITACHI HIGH-TECHNOLOGIES CORPORATION) 30 September 2004 (2004-09-30) paragraphs [0019]-[0040], fig. 2, 3, 6, 7 | 1-2, 7-8 |
| A | | 4, 6 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/017503**

| Patent document cited in search report | | | Publication date (day/month/year) | Patent family member(s) | Publication date (day/month/year) |
|---|---|---|---|---|---|
| JP | 2005-249585 | A | 15 September 2005 | (Family: none) | |
| JP | 2002-333449 | A | 22 November 2002 | (Family: none) | |
| JP | 2004-271266 | A | 30 September 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007315984 A